(19) Europäisches Patentamt
European Patent Office
Office européen des brevets

(11) **EP 3 702 662 B1**

(12) **EUROPEAN PATENT SPECIFICATION**

(45) Date of publication and mention
of the grant of the patent:
**14.09.2022 Bulletin 2022/37**

(21) Application number: **20159312.6**

(22) Date of filing: **25.02.2020**

(51) International Patent Classification (IPC):
*F17C 13/02* *(2006.01)*     *A62C 35/13* *(2006.01)*
*A62C 37/50* *(2006.01)*     *G01F 23/26* *(2022.01)*
*G01F 23/263* *(2022.01)*

(52) Cooperative Patent Classification (CPC):
**A62C 37/50; A62C 35/13; F17C 13/02;
G01F 23/263;** F17C 2270/0754

(54) **FIRE SUPPRESSANT SYSTEM**

FEUERLÖSCHSYSTEM

SYSTÈME D'EXTINCTION D'INCENDIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2019 IN 201911007926**

(43) Date of publication of application:
**02.09.2020 Bulletin 2020/36**

(73) Proprietor: **Carrier Corporation
Palm Beach Gardens, FL 33418 (US)**

(72) Inventor: **SORATKAL, Sreeramya
500081 Hyderabad (IN)**

(74) Representative: **Dehns
St. Bride's House
10 Salisbury Square
London EC4Y 8JD (GB)**

(56) References cited:
DE-A1- 3 731 793     US-A1- 2004 164 868
US-A1- 2017 199 070

**Description**

The present invention relates to a fire suppression system, and to a method for detecting an amount of suppressant in a fire suppression cylinder.

A "clean agent" is a type of fire suppressant. A clean agent fire suppression system extinguishes fires by creating a fire extinguishing atmosphere consisting of agent vapor or gas mixed with the air within the protected space. Clean agent systems may be used in buildings and other such structures and areas to suppress fires without water, powder or foam so not as to destroy or damage an enclosed area of the structure and/or equipment contained therein.

Sensors like magnetic float and reed switch based techniques are currently used to determine the level of clean agent present in a suppression cylinder. However, these devices have traditionally only been useful for welded, not seamless, cylinders, and the process of determining the level of clean agent based on readings from these devices is tedious.

DE 37 31 793 A1 discloses a fire extinguishing system wherein the fill level of fire extinguishing agent can be determined by measuring the capacitance between an immersion tube and a pressurized gas cylinder. US 2004/164868 A1 discloses a fire extinguishing device comprising a capacitive measuring device used to detect gas loss from a pressure tank.

Viewed from a first aspect, the invention provides a fire suppression system comprising: a cylinder having a wall defining an inner chamber, a processor operable to determine an amount of a suppressant in the inner chamber based on a capacitance between a first electrode and a second electrode that are both in contact with the suppressant, and a siphon tube disposed within the inner chamber and spaced apart from the wall. The siphon tube includes opposing first and second ends, the first end coupled to an output of the cylinder, the second end proximate to a base portion of the wall, the cylinder including a gap between the second end and the base portion. One of the first and second electrodes includes the siphon tube, and the other of the first and second electrodes includes the wall; each of the first electrode and second electrode are also in contact with a pressurant in the inner chamber; and the capacitance is an effective capacitance based on a first capacitance between the first and second electrodes with the suppressant as a dielectric medium, a second capacitance between the first and second electrodes with the pressurant as a dielectric medium, and a stray capacitance of each of the siphon tube and the wall, the stray capacitance indicative of a size of the gap. The determination of the amount of suppressant in the inner chamber is based on, a radius of the siphon tube, a radius of the cylinder, a dielectric constant of the suppressant, a dielectric constant of the pressurant, and a size of the gap between the base portion of the cylinder and the second end of the siphon tube.

Optionally, the processor is operable to determine the amount of suppressant in the inner chamber based on a predefined mapping between capacitance values and suppressant amounts for the cylinder.

Optionally, the processor is operable to display an indication of the amount of suppressant on an electronic display.

Optionally, a measuring circuit is operable to measure the capacitance between the first and second electrodes and provide the measured capacitance to the processor.

Viewed from a second aspect, the invention provides a method comprising using the fire suppression system of the first aspect for determining the amount of suppressant in the cylinder, the method comprising: measuring the capacitance between the first electrode and the second electrode, and determining the amount of suppressant within the cylinder based on the capacitance.

Optionally, determining an amount of the suppressant within the cylinder based on the capacitance is performed using a predefined mapping between capacitance values and suppressant amounts for the cylinder.

A fire suppression system according to an example of the present disclosure includes a cylinder comprising a wall defining an inner chamber, a siphon tube disposed within the inner chamber and spaced apart from the wall, and a processor operable to determine a level of suppressant in the inner chamber based on a capacitance between the wall and the siphon tube.

The capacitance is an effective capacitance based on a first capacitance between the siphon tube and wall with the suppressant as a dielectric medium, and a second capacitance between the siphon tube and wall with a pressurant as a dielectric medium.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

Figure 1 is a schematic view of an example fire suppression system.
Figure 2 is a schematic view of a plurality of capacitances of the fire suppression system.
Figure 3 schematically illustrates an end of a siphon tube of the fire suppression system as a toroidal ring.
Figure 4 is a graph plotting example capacitance values for example suppressant levels.

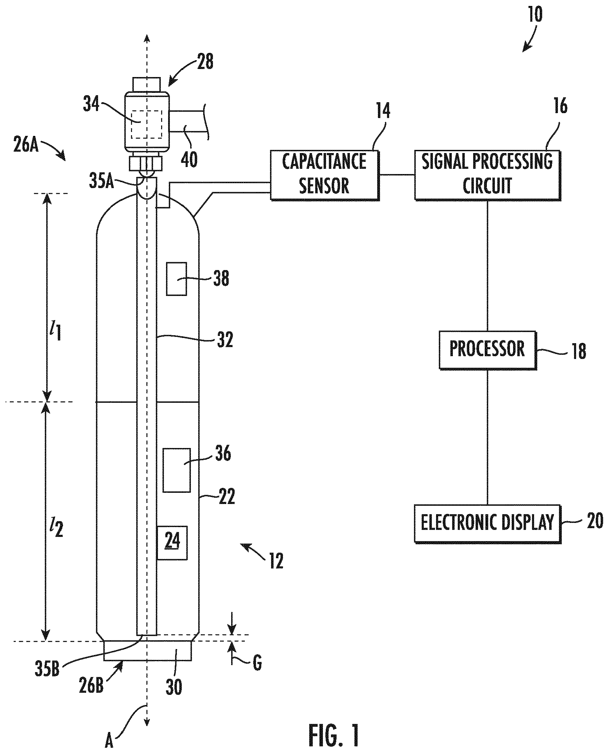

Figure 1 is a schematic view of an example fire suppression system 10 that is operable to determine a level of suppressant within a cylinder 12 based on capacitive sensing. The fire suppression system 10 includes the cylinder 12, a capacitance sensor 14, a signal processing circuit 16, a processor 18, and an electronic display 20.

The cylinder 12 includes a wall 22 defining an inner chamber 24. The cylinder 12 has opposing first and second ends 26A-B. A control head 28 is disposed at the first end 26A of the cylinder 12, and a base portion 30 of the wall 22 is disposed at the second end 26B of the cylinder 12.

A siphon tube 32 is disposed within the cylinder 12 and provides for fluid communication between the inner chamber 24 and an output valve 34 in the control head 28. The siphon tube 32 is spaced away from the wall 22. The siphon tube 32 includes opposing first and second ends 35A-B. The first end 35A is proximate to the control head 28 and the second end 35B is proximate to the base portion 30 of the wall 22. A cap G is formed between the second end 35B of the siphon tube 32 and the base portion 30 of the wall 22. In the example of Figure 1, the wall 22 and siphon tube 32 are concentric and share a same central longitudinal axis A.

Within the inner chamber 24, a suppressant 36 is disposed beneath a pressurant 38. The pressurant 38 is a gas, such as nitrogen, that pressurizes the suppressant 36, and causes the suppressant 36 to travel through the siphon tube 32 and through the valve 34 upon opening of the valve 34. The output valve 34 may be fluidly connected to an output channel 40, such as an output manifold, for dispensing the suppressant 36. The suppressant 36 can be a clean agent (e.g., Novec 1230), a wet chemical, or a dry chemical, for example. The wall 22 and siphon tube 32 are each in contact with both of the suppressant 36 and the pressurant 38 in the inner chamber 24. A height of the pressurant 38 in the cylinder 12 is represented by length $\ell_1$, and a height of the suppressant 36 within the cylinder 12 is represented by length $\ell_2$.

The wall 22 of the cylinder 12 and the siphon tube 32 are both electrically conductive, and because of their relative proximity to each other, and the suppressant 36 and pressurant 38 between them, the wall 22 and siphon tube 32 can each operate as an electrode of a capacitor. If a voltage difference is applied between the wall 22 and siphon tube 32, an electric field is formed therebetween, and a fringing effect of the electric field lines is produced.

The suppressant 36 and pressurant 38 have different dielectric constants ($\varepsilon_1$ for the pressurant 38 and $\varepsilon_2$ for the suppressant 36) and act as separate dielectric mediums. As the amount of suppressant 36 in the cylinder 12 is lowered (e.g., through suppressant dispensing), the pressurant 38 gas displaces the suppressant 36 and changes the capacitance between the wall 22 and siphon tube 32.

The capacitance sensor 14 is operable to measure a capacitance between the wall 22 and siphon tube 32, and provide a signal indicative of that capacitance to signal processing circuit 16. The signal processing circuit 16 processes that signal (e.g., by filtering and/or amplifying the signal) and provides a processed signal to the processor 18, which determines an amount of suppressant 36 in the inner chamber 24 based on the capacitance between the wall 22 and siphon tube 32.

The processor 18 is operable to display an indication of the amount of suppressant 36 within the cylinder 12 on an electronic display 20, which may be an organic light-emitting diode (OLED) display, for example. The indication could include a color corresponding to the level (e.g., green for a first amount of suppressant 36, yellow for a second, smaller amount of suppressant 36, and red for a third, even smaller amount of suppressant 36). In one example the suppressant amount is indicated as a height of the suppressant 36 within the inner chamber 22 (e.g., magnitude of $\ell_2$) and/or a weight of the suppressant 36 within the inner chamber 22.

The processor 18 can be a microcontroller, microprocessor, application-specific integrated circuit (ASIC), or the like.

The capacitance measured by the capacitance sensor 14 represents an effective capacitance $C_{eff}$ that is based on a first capacitance $C_1$ between the wall 22 and siphon tube 32 with the pressurant 38 as a dielectric medium, a second capacitance $C_2$ between the wall 22 and siphon tube 32 with the suppressant 36 as a dielectric medium, and a stray capacitance $C_S$ of each of the wall 22 and siphon tube 32, as shown in equation (1) below.

$$C_{eff} = C_1 + C_2 + C_S \qquad\qquad \text{equation (1)}$$

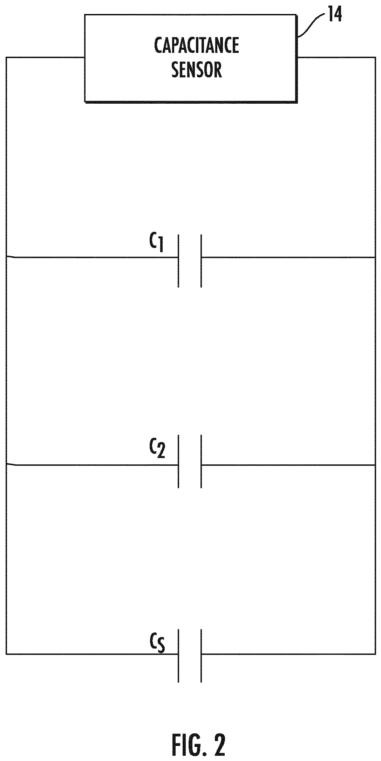

Figure 2 schematically illustrates the capacitance values $C_1$, $C_2$, and $C_S$. The capacitances $C_1$ and $C_2$ can be calculated using equations (2)-(3) below.

$$C_1 = \frac{2\pi\varepsilon_1\ell_1}{ln\left(\frac{R_2}{R_1}\right)} \qquad\qquad \text{equation (2)}$$

$$C_2 = \frac{2\pi\varepsilon_2 \ell_2}{ln\left(\frac{R_2}{R_1}\right)}$$

equation (3)

where $\varepsilon_1$ is the dielectric constant of the pressurant 38;

$\varepsilon_2$ is the dielectric constant of the suppressant 36;
$R_1$ is an inner radius of the cylinder 12;
$R_2$ is an outer radius of the siphon tube 32;
$\ell_1$ is the height of the pressurant 38 within the cylinder 12; and
$\ell_2$ is the height of the suppressant 36 within the cylinder 12.

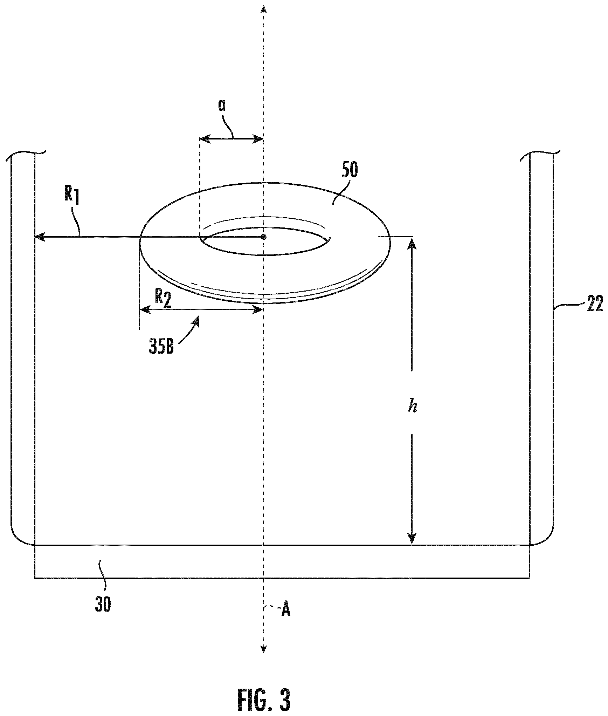

Figure 3 schematically illustrates the second end 35B of the siphon tube 32 as a toroidal ring, along with parameters $R_1$ and $R_2$ from equations 1-2 above.

The stray capacitance $C_S$ is based on a size of the gap G between the second end 35B of the siphon tube 32 and the base portion 30 of the wall 22, and can be calculated using equation (4) below, which considers the end 35B of the siphon tube 32 as a circular toroidal ring (as shown in Figure 3).

$$C_S = \frac{4\pi^2\varepsilon_2 R}{\ln\left(\frac{8*R}{a}\right) - K(k^2)*k}$$

equation (4)

where: $K$ is an elliptical integral of the first kind;

$k$ is a constant that can be calculated using equation (5) below; and
$a$ is an inner radius of the siphon tube 32.

$$k^2 = \frac{R^2}{R^2 + h^2}$$

equation (5)

where: R is equivalent to the outer radius $R_2$ of the siphon tube 32; and
$h$ is a size of the gap G.

Another way of representing the stray capacitance $C_S$ is based on its constituent components $C_3$ which represents a stray capacitance of the wall 22, and $C_4$ which represents a stray capacitance of the siphon tube 32, as shown in equation (6) below.

$$C_S = \frac{C_3 * C_4}{C_3 + C_4}$$

equation (6)

Another way of representing the effective capacitance $C_{eff}$ is with equation (5) below.

$$C_{eff} = \frac{C_3 * C_4}{C_3 + C_4} + C_1 + C_2$$

equation (5)

where: $C_1$ and $C_2$ are the same as described above;

$C_3$ is a stray capacitance of the wall 22; and
$C_4$ is a stray capacitance of the siphon tube 32.

In one example, the processor 18 is configured to determine the amount of suppressant 36 in the inner chamber 24 based on a predefined mapping between capacitance values and suppressant amounts for the cylinder 12. One example mapping is provided below in Table 1, which maps suppressant levels to corresponding effective capacitance values in picofarads for the suppressant Novec 1230 in a 125 pound cylinder. As shown in the table, the effective capacitance varies with the suppressant level, with decreasing suppressant levels yielding decreased effective capacitance values.

Table 1

| Suppressant level in inches | Effective capacitance in pF | Suppressant level in inches | Effective capacitance in pF |
|---|---|---|---|
| 1 | 38.67 | 17 | 52.39 |
| 2 | 39.52 | 18 | 53.24 |
| 3 | 40.38 | 19 | 54.1 |
| 4 | 41.24 | 20 | 54.96 |
| 5 | 42.1 | 21 | 55.82 |
| 6 | 42.95 | 22 | 6.67 |
| 7 | 43.81 | 23 | 57.53 |
| 8 | 44.67 | 24 | 58.39 |
| 9 | 45.53 | 25 | 59.25 |
| 10 | 46.38 | 26 | 60.1 |
| 11 | 47.24 | 27 | 60.96 |
| 12 | 48.1 | 28 | 61.82 |
| 13 | 48.96 | 29 | 62.68 |
| 14 | 49.81 | 30 | 63.53 |
| 15 | 50.67 | 31 | 64.39 |
| 16 | 51.53 | 32 | 65.25 |

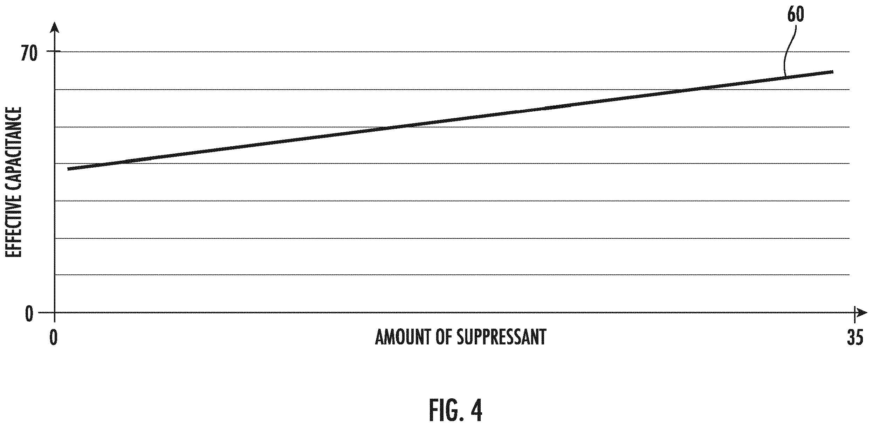

Figure 4 is a graph that plots the values of Figure 4, and demonstrates how the relationship between effective capacitance and suppressant level, shown on plot 60, is generally linear.

Another example mapping could map capacitance values to suppressant weight values in the inner chamber 24.

The system described herein confers a number of benefits, including suitability for both seamless and welded fire suppression cylinders. Also, because little modification is needed to the current infrastructure for fire suppression cylinders, the system described herein is well-suited for retrofitting into existing suppression cylinders. The linearity in sensing shown in Figure 4 provides for reliable sensing, and using the wall 22 and siphon tube 32 as electrodes provides for improved sensor life as compared to prior art sensors. Still further, the detection system 10 provides for convenient real time monitoring.

Although example embodiments have been disclosed, a worker of ordinary skill in this art would recognize that certain modifications would come within the scope of the invention, as defined by the claims. For that reason, the following claims should be studied to determine the scope of the invention.

**Claims**

1. A fire suppression system (10), comprising:

a cylinder (12) having a wall (22) defining an inner chamber (24); and
a processor (18) operable to determine an amount of a suppressant in the inner chamber based on a capacitance between a first electrode and a second electrode that are both in contact with the suppressant; and
a siphon tube (32) disposed within the inner chamber (24) and spaced apart from the wall (22) comprising opposing first (35A) and second (35B) ends, the first end coupled to an output (28) of the cylinder (12), the second end proximate to a base portion (30) of the wall (22), the cylinder including a gap (G) between the second end and the base portion, wherein
one of the first and second electrodes includes the siphon tube, and the other of the first and second electrodes includes the wall;

each of the first electrode and second electrode is also in contact with a pressurant (38) in the inner chamber (24);
the capacitance is an effective capacitance based on a first capacitance between the first and second electrodes with the suppressant (36) as a dielectric medium, a second capacitance between the first and second electrodes with the pressurant (38) as a dielectric medium, and a stray capacitance of each of the siphon tube (32) and the wall (22) indicative of a size of the gap (G); and
the determination of the amount of suppressant (36) in the inner chamber (24) is based on:

a radius ($R_2$) of the siphon tube (32);
a radius ($R_1$) of the cylinder (12);
a dielectric constant of the suppressant;
a dielectric constant of the pressurant (38); and
a size of the gap (G) between the base portion (30) of the cylinder and the second end (35B) of the siphon tube.

2. The fire suppression system of claim 1, wherein the siphon tube (32) and cylinder (12) are concentric.

3. The fire suppression system of any preceding claim, wherein the processor (18) is operable to determine the amount of suppressant (36) in the inner chamber (24) based on a predefined mapping between capacitance values and suppressant amounts for the cylinder (12).

4. The fire suppression system of any preceding claim, comprising an electronic display (20), the processor (18) operable to display an indication of the amount of suppressant (36) on the electronic display.

5. The fire suppression system of any preceding claim, comprising a measuring circuit (16) operable to measure the capacitance between the first and second electrodes and provide the measured capacitance to the processor (18).

6. A method comprising using the fire suppression system of any preceding claim for determining the amount of suppressant (36) in the cylinder (12), comprising:

measuring the capacitance between the first electrode and the second electrode; and
determining the amount of suppressant within the cylinder based on the capacitance.

7. The method of claim 6, wherein said step of determining an amount of the suppressant (36) within the cylinder (12) based on the capacitance is performed using a predefined mapping between capacitance values and suppressant amounts for the cylinder.

**Patentansprüche**

1. Feuerlöschsystem (10), umfassend:

einen Zylinder (12), der eine Wand (22) aufweist, die eine Innenkammer (24) definiert; und
einen Prozessor (18), der betriebsfähig ist, eine Menge eines Löschmittels in der Innenkammer auf Basis einer Kapazität zwischen einer ersten Elektrode und einer zweiten Elektrode, die beide in Kontakt mit dem Löschmittel sind, zu ermitteln; und
ein Ablaufrohr (32), das innerhalb der Innenkammer (24) angeordnet und von der Wand (22) beabstandet ist, umfassend ein erstes (35A) und gegenüberliegendes zweites (35B) Ende, wobei das erste Ende mit einem Ausgang (28) des Zylinders (12) gekoppelt ist, das zweite Ende nahe einem Basisabschnitt (30) der Wand (22) ist, der Zylinder einen Spalt (G) zwischen dem zweiten Ende und dem Basisabschnitt beinhaltet, wobei
eine der ersten und zweiten Elektrode das Ablaufrohr beinhaltet und die andere der ersten und zweiten Elektrode die Wand beinhaltet;
sowohl die erste Elektrode als auch zweite Elektrode auch in Kontakt mit einem Druckmittel (38) in der Innenkammer (24) ist;
die Kapazität eine effektive Kapazität auf Basis einer ersten Kapazität zwischen der ersten und zweiten Elektrode mit dem Löschmittel (36) als ein dielektrisches Medium, einer zweiten Kapazität zwischen der ersten und zweiten Elektrode mit dem Druckmittel (38) als ein dielektrisches Medium, und einer Streukapazität sowohl des Ablaufrohrs (32) als auch der Wand (22), die eine Größe des Spalts (G) angibt, ist; und
die Ermittlung der Menge an Löschmittel (36) in der Innenkammer (24) auf Folgendem basiert:

einem Radius ($R_2$) des Ablaufrohrs (32);
einem Radius ($R_1$) des Zylinders (12);
einer dielektrischen Konstante des Löschmittels;
einer dielektrischen Konstante des Druckmittels (38); und
einer Größe des Spalts (G) zwischen dem Basisabschnitt (30) des Zylinders und dem zweiten Ende (35B) des Ablaufrohrs.

2. Feuerlöschsystem nach Anspruch 1, wobei das Ablaufrohr (32) und der Zylinder (12) konzentrisch sind.

3. Feuerlöschsystem nach einem vorstehenden Anspruch, wobei der Prozessor (18) betriebsfähig ist, die Menge an Löschmittel (36) in der Innenkammer (24) auf Basis einer vorgegebenen Zuordnung zwischen Kapazitätswerten und Löschmittelmengen für den Zylinder (12) zu ermitteln.

4. Feuerlöschsystem nach einem vorstehenden Anspruch, umfassend eine elektronische Anzeige (20), wobei der Prozessor (18) betriebsfähig ist, eine Angabe der Menge an Löschmittel (36) auf der elektronischen Anzeige anzuzeigen.

5. Feuerlöschsystem nach einem vorstehenden Anspruch, umfassend einen Messschaltkreis (16), der betriebsfähig ist, die Kapazität zwischen der ersten und zweiten Elektrode zu messen und die gemessene Kapazität an den Prozessor (18) bereitzustellen.

6. Verfahren, umfassend Verwenden des Feuerlöschsystems nach einem vorstehenden Anspruch, um die Menge an Löschmittel (36) in dem Zylinder (12) zu ermitteln, das Folgendes umfasst:

Messen der Kapazität zwischen der ersten Elektrode und der zweiten Elektrode; und
Ermitteln der Menge an Löschmittel innerhalb des Zylinders auf Basis der Kapazität.

7. Verfahren nach Anspruch 6, wobei der Schritt zum Ermitteln einer Menge des Löschmittels (36) innerhalb des Zylinders (12) auf Basis der Kapazität unter Verwendung einer vordefinierten Zuordnung zwischen Kapazitätswerten und Löschmittelmengen für den Zylinder durchgeführt wird.


**Revendications**

1. Système d'extinction d'incendie (10), comprenant :

une bonbonne (12) ayant une paroi (22) définissant une chambre intérieure (24) ; et
un processeur (18) utilisable pour déterminer une quantité d'un agent extincteur dans la chambre interne sur la base d'une capacité entre une première électrode et une seconde électrode qui sont toutes les deux en contact avec l'agent extincteur ; et
un tube d'aspiration (32) disposé à l'intérieur de la chambre interne (24) et espacé de la paroi (22) comprenant des première (35A) et seconde (35B) extrémités opposées, la première extrémité accouplée à une sortie (28) de la bonbonne (12), la seconde extrémité à proximité d'une partie base (30) de la paroi (22), la bonbonne incluant un espace (G) entre la seconde extrémité et la partie base, dans lequel
l'une de la première et de la seconde électrode inclut le tube d'aspiration, et l'autre de la première et de la seconde électrode inclut la paroi ;
chacune de la première électrode et de la seconde électrode est également en contact avec un agent de pressurisation (38) dans la chambre interne (24) ;
la capacité est une capacité effective basée sur une première capacité entre les première et seconde électrodes avec l'agent extincteur (36) sous forme de milieu diélectrique, une seconde capacité entre les première et seconde électrodes avec l'agent de pressurisation (38) sous forme d'un milieu diélectrique, et une capacité parasite de chacun du tube d'aspiration (32) et de la paroi (22) indiquant une taille de l'espace (G) ; et
la détermination de la quantité d'agent extincteur (36) dans la chambre interne (24) est basée sur :

un rayon ($R_2$) du tube d'aspiration (32) ;
un rayon ($R_1$) de la bonbonne (12) ;
une constante diélectrique de l'agent extincteur ;
une constante diélectrique de l'agent de pressurisation (38) ; et

une taille de l'espace (G) entre la partie base (30) de la bonbonne et la seconde extrémité (35B) du tube d'aspiration.

2. Système d'extinction d'incendie selon la revendication 1, dans lequel le tube d'aspiration (32) et la bonbonne (12) sont concentriques.

3. Système d'extinction d'incendie selon l'une quelconque des revendications précédentes, dans lequel le processeur (18) est utilisable pour déterminer la quantité d'agent extincteur (36) dans la chambre interne (24) sur la base d'une mise en correspondance prédéfinie entre des valeurs de capacité et des quantités d'agent extincteur pour la bonbonne (12).

4. Système d'extinction d'incendie selon l'une quelconque des revendications précédentes, comprenant un écran électronique (20), le processeur (18) étant utilisable pour afficher une indication de la quantité d'agent extincteur (36) sur l'écran électronique.

5. Système d'extinction d'incendie selon l'une quelconque des revendications précédentes, comprenant un circuit de mesure (16) utilisable pour mesurer la capacité entre les première et seconde électrodes et fournir la capacité mesurée au processeur (18).

6. Procédé comprenant l'utilisation du système d'extinction d'incendie selon l'une quelconque des revendications précédentes pour déterminer la quantité d'agent extincteur (36) dans la bonbonne (12), comprenant :

la mesure de la capacité entre la première électrode et la seconde électrode ; et
la détermination de la quantité d'agent extincteur dans la bonbonne sur la base de la capacité.

7. Procédé selon la revendication 6, dans lequel ladite étape de détermination d'une quantité d'agent extincteur (36) dans la bonbonne (12) sur la base de la capacité est effectuée en utilisant une mise en correspondance prédéfinie entre des valeurs de capacité et des quantités d'agent extincteur pour la bonbonne.

FIG. 1

FIG. 2

**FIG. 3**

FIG. 4

**EP 3 702 662 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3731793 A1

- US 2004164868 A1